# EUROPEAN PATENT APPLICATION

(11) **EP 4 336 250 A1**
(43) Date of publication of application: **13.03.2024**
(21) Application number: 23192726.0
(22) Date of filing: 22.08.2023
(51) Int. Cl.: G02F 1/29, G02F 1/1339

(54) **GRIN LC LENS WITH CARBON NANOTUBE SPACERS**

(30) Priority: 07.09.2022 US 202263404260 P; 03.04.2023 US 202318295099
(71) Applicant: Meta Platforms Technologies, LLC, Menlo Park, CA 94025 (US)
(72) Inventor: BHOWMICK, Amit, Menlo Park (US); STIPE, Christopher, Menlo Park (US); JAMALI, Afsoon, Menlo Park (US); REZNIKOV, Dymtro Y, Menlo Park (US); UPPALAPATI, Sriharsha, Menlo Park (US)
(74) Representative: Murgitroyd & Company

(57) **Abstract**

An optical element includes a first optical substrate, a second optical substrate overlying at least a portion of the first optical substrate, a liquid crystal layer disposed within a cell gap between the first optical substrate and the second optical substrate, and a plurality of carbon nanotube pillars extending between the first optical substrate and the second optical substrate across the cell gap. The carbon nanotube pillars may have an aspect ratio of at least approximately 2:1, and may be configured to maintain a uniform cell gap thickness.

## Description

### TECHNICAL FIELD

The present disclosure relates generally to gradient-index (GRIN) liquid crystal (LC) lenses and finds particular, although not exclusive, utility in providing a GRIN LC lens that is configured to operate without the generation of significant haze or ghosting, or a loss of transmission.

### BACKGROUND

Across various optical engineering applications including eyeglasses, contact lenses, and vision correction elements in augmented reality (AR) and virtual reality (VR) systems, liquid crystal (LC) lenses may provide a number of advantages due to their electrically tunable focusing capability, where the associated optical mechanism is based on a spatially localized modulation of light speed resulting from LC molecular orientations driven by applied electric fields.

In such context, and as will be appreciated, the realization of a continuous distribution of phase retardation across larger aperture (> 10 mm) LC lenses may be challenged by the limited birefringence (< 0.4) of LC materials as well as their mechanically compliant nature.

Gradient-index (GRIN) optics refers to a branch of optics where optical effects are produced by a spatial gradient in the refractive index of a material. A gradual refractive index variation may be used to manufacture lenses having planar surfaces, for example, or to reduce aberrations in imaging applications.

A gradient refractive index lens utilizes a spatially-defined refractive index gradient across the viewing aperture of the lens to impart an optical phase profile at a selected design wavelength. In particular examples, a GRIN lens may have a planar form factor, such as a disk shape, and lensing performance that may be improved relative to lenses formed from a material having a single, spatially-invariant index, such as comparative lenses made from glass or quartz.

Notwithstanding recent developments, it would be advantageous to provide a manufacturable and economical GRIN LC lens design that is configured to operate without the generation of significant haze or ghosting, or a loss of transmission.

### SUMMARY

According to a first aspect, there is provided an optical element comprising: a first optical substrate; a second optical substrate overlying at least a portion of the first optical substrate; a liquid crystal layer disposed within a cell gap between the first optical substrate and the second optical substrate; and a plurality of carbon nanotube pillars extending between the first optical substrate and the second optical substrate across the cell gap.

The optical element may be a liquid crystal lens.

The plurality of carbon nanotubes may be configured to maintain a uniform spacing between the first optical substrate and the second optical substrate.

The first and second optical substrates may comprise glass.

A thickness of the first and second optical substrates may independently range from approximately 100 micrometers to approximately 300 micrometers.

An inter-substrate dimension of the cell gap may be spatially invariant across a viewing aperture of the optical element.

An inter-substrate dimension of the cell gap may range from approximately 5 micrometers to approximately 50 micrometers.

The carbon nanotube pillars may have a length of from approximately 5 micrometers to approximately 50 micrometers.

The carbon nanotube pillars may have a diameter of from approximately 2 nm to approximately 50 nm.

The carbon nanotube pillars may have an aspect ratio of at least approximately 2:1.

The carbon nanotube pillars may be arranged as a regular array between the first and second optical substrates.

The carbon nanotube pillars may be configured to maintain a uniform cell gap between the first and second optical substrates.

The optical element may comprise a viewing aperture that extends through the first and second optical substrates and the liquid crystal layer and includes at least one of the plurality of carbon nanotube pillars. The viewing aperture may comprise a transmissivity across the visible spectrum of at least approximately 80% and less than approximately 10% bulk haze.

The optical element may further comprise: a first electrode layer disposed between the liquid crystal layer and the first optical substrate; and a second electrode layer disposed between the liquid crystal layer and the second optical substrate.

According to a second aspect, there is provided an augmented reality (AR) or virtual reality (VR) system comprising: an AR or VR headset; and a variable power lens comprising the optical element of the first aspect.

According to a third aspect, there is provided a method comprising: forming a plurality of carbon nanotube pillars over and extending away from a first optical substrate; forming a second optical substrate over the first optical substrate, wherein the plurality of carbon nanotube pillars define a cell gap between the first optical substrate and the second optical substrate; and forming a liquid crystal layer within the cell gap.

Forming the plurality of carbon nanotube pillars may comprise: forming a dielectric layer over the first optical substrate; forming a templating layer over the dielectric layer; etching the templating layer to form a plurality of vias extending entirely through the templating layer; depositing a seed layer over exposed portions of the dielectric layer within the plurality of vias; and exposing the seed layer to a carbon nanotube precursor to form the carbon nanotube pillars.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 is a cross-sectional view of a GRIN LC lens including carbon nanotube spacers.
FIG. 2 illustrates an example method of forming an array of carbon nanotube spacers.
FIG. 3 is a schematic representation of a single wall carbon nanotube (SWCNT) and a multi-walled carbon nanotube (MWCNT).
FIG. 4 summarizes the properties of example single wall carbon nanotubes (SWCNTs) and multi-walled carbon nanotubes (MWCNTs).
FIG. 5 is an illustration of exemplary augmented-reality glasses that may be used in connection with embodiments of this disclosure.
FIG. 6 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

GRIN-type varifocal LC lenses may be configured to exhibit a gradient distribution of refractive index in response to a spatially inhomogeneous electric field that is applied across the LC layer(s). As such, the lens power of a GRIN-type LC lens may also be continuously tunable. In some instantiations, there may be a continuous variation of the refractive index within the lens material. An LC lens may be configured in both planar and non-planar (e.g., concave or convex) geometries.

In an LC lens having an axial gradient configuration, the refractive index may vary along the optical axis of an inhomogeneous medium such that surfaces of constant index are planes that are oriented perpendicular to the optical axis. In a radial/cylindrical refractive index gradient configuration, on the other hand, the index profile may vary continuously from a centerline of the optical axis to the periphery along the transverse direction in such a way that surfaces of constant index are concentric cylinders located about the optical axis. Hybrid GRIN LC lenses having both an axial and a radial/cylindrical refractive index gradient configuration are also contemplated.

In some systems, a tunable architecture may include a plurality of discrete, ring electrodes formed over the LC layer(s) within the optical aperture of the lens. During operation, a different voltage may be applied to each electrode, which may be used to locally tune the refractive index of the LC material. As will be appreciated, the patterning of multiple electrodes may create manufacturing challenges and also induce performance liabilities, including a loss of transmission, a decrease in focal power, and/or the generation of optical artifacts such as haze and/or ghosting due to angular diffraction arising from sub-critical electrode dimensions or the gap between neighboring electrodes. In some embodiments, the inter-electrode gaps across the viewing aperture of a varifocal GRIN LC lens may be greater than approximately 1 micrometer. In some embodiments, a gradient-index configuration may be used to provide tunability of focus quality.

As used herein, the terms "haze" and "clarity" may refer to optical phenomena associated with the transmission of light through a material, and may be attributed, for example, to the refraction of light within the material, e.g., due to secondary phases or porosity and/or the reflection of light from one or more surfaces of the material. Haze may be associated with an amount of light that is subject to wide angle scattering (i.e., at an angle greater than 2.5° from normal) and a corresponding loss of transmissive contrast, whereas clarity may relate to an amount of light that is subject to narrow angle scattering (i.e., at an angle less than 2.5° from normal) and an attendant loss of optical sharpness or "see through quality."

Notwithstanding recent developments, it would be advantageous to provide a manufacturable and economical GRIN LC lens design that is configured to operate without the generation of significant haze or ghosting, or a loss of transmission. Such a GRIN LC lens design may be configured to provide a high varifocal range with high optical power and commercially relevant response times across a large aperture. The present disclosure thus relates to large aperture (diameter ~ 50 mm) GRIN LC lenses operable with rapid switching times (< 1 sec) over a large optical power range (e.g., 0 to 3 Diopters). Example GRIN LC lenses include a relatively large cell gap with good cell gap uniformity. As disclosed herein, carbon nanotubes may be implemented as offset elements (i.e., spacers) to produce and maintain a large and uniform cell gap between opposing substrates. The carbon nanotubes may be configured as columnar spacers that provide a constant and uniform cell gap.

In accordance with example embodiments, an optical element such as a GRIN LC lens may include a first optical substrate, a second optical substrate overlying at least a portion of the first optical substrate, a liquid crystal layer disposed within a cell gap between the first optical substrate and the second optical substrate, and a plurality of carbon nanotube pillars extending across the cell gap between the first optical substrate and the second optical substrate. A first electrode layer may be disposed between the liquid crystal layer and the first optical substrate and a second electrode layer may be disposed between the liquid crystal layer and the second optical substrate.

The first and second substrates may be transparent and may define an optical aperture of a GRIN LC lens. As used herein, an "optical" substrate may be characterized by a transmissivity within the visible light spectrum of at least approximately 80%, e.g., 80, 90, 95, 97, or 99%, including ranges between any of the foregoing values, and less than approximately 10% bulk haze, e.g., 0, 1, 2, 4, 6, or 8% bulk haze, including ranges between any of the foregoing values.

The electrodes may include one or more electrically conductive materials, such as a metal, conductive polymer, or conductive oxide. The electrodes may include a blanket or patterned structure, and may include an electrically conductive material (i.e., particles) dispersed throughout a matrix. Electrically conductive particles may include nanoparticles, nanowires (e.g., silver nanowires), nanotubes (e.g., carbon nanotubes), transparent conductive oxides, graphene (e.g., graphene flakes), oxidized graphene, fluorinated graphene, hydrogenated graphene, other graphene derivatives, and carbon black, for example. Example transparent conductive oxides (TCOs) include indium tin oxide (ITO) and indium gallium zinc oxide (IGZO), although further TCOs are contemplated. In some embodiments, an electrode may include a low melting temperature composition (e.g., alloy), such as indium, tin, gallium, and the like. In some embodiments, the electrodes may have an electrical conductivity of at least approximately 1 S/cm.

Example carbon nanotubes may have a width (diameter) ranging from approximately 0.5 nm to approximately 100 nm, e.g., 0.5, 1, 2, 3, 4, 5, 10, 20, 50, or 100 nm, including ranges between any of the foregoing value, and a length ranging from approximately 10 micrometers to approximately 50 micrometers, e.g., 10, 20, 30, 40, or 50 micrometers, including ranges between any of the foregoing values. The carbon nanotubes may be characterized by an aspect ratio (lengthwidth) of at least 1:1, e.g., 1:1, 2:1; 5:1, 10:1, 20:1, 50:1, 100:1, 200:1, 500:1, 1000:1, 2000:1, 5000:1, 10000:1, or more, including ranges between any of the foregoing values. In accordance with various embodiments, carbon nanotubes may have a single wall or multi-walled structure.

In some embodiments, the carbon nanotubes may have planar or substantially planar sidewalls, and the sidewalls may be inclined at any suitable angle with respect to a major surface of a substrate. For instance, the carbon nanotubes may have a cylindrical shape and may be positioned orthogonal with respect to a substrate's major surface. Alternatively, the carbon nanotubes may have a conical shape where the sidewalls may be oriented at any suitable angle (45° ≤ Q < 90°).

Plural carbon nanotubes may be configured in any suitable arrangement between the substrates, such as an irregular or regular array. The spacing and/or configuration of the carbon nanotubes may be selected to maintain a uniform and constant cell gap between the substrates. In some embodiments, plural carbon nanotubes may be self-similar. Alternatively, the cross-sectional shape and dimension of plural carbon nanotubes may be independently controlled. Methods of manufacturing carbon nanotube spacers include laser ablation, chemical vapor deposition, arc discharge, and the like.

In accordance with various embodiments, the incorporation of high aspect ratio carbon nanotube spacers into GRIN LC lenses may decrease light scattering and light leakage relative to comparative spacer architectures, which may decrease haze and improve both the contrast ratio and the modulation transfer function during lens operation. That is, carbon nanotubes may absorb light and thus attenuate the amount of light that is scattered. Moreover, relative to comparative spacer materials, carbon nanotubes may have a greater tensile strength, which may allow the use of a fewer number of spacers. In certain embodiments, electrically conductive carbon nanotube spacers may be incorporated into the electrodes and/or bus architecture of an optical element.

Features from any of the embodiments described herein may be used in combination with one another in accordance with the general principles described herein. These and other embodiments, features, and advantages will be more fully understood upon reading the following detailed description in conjunction with the accompanying drawings and claims.

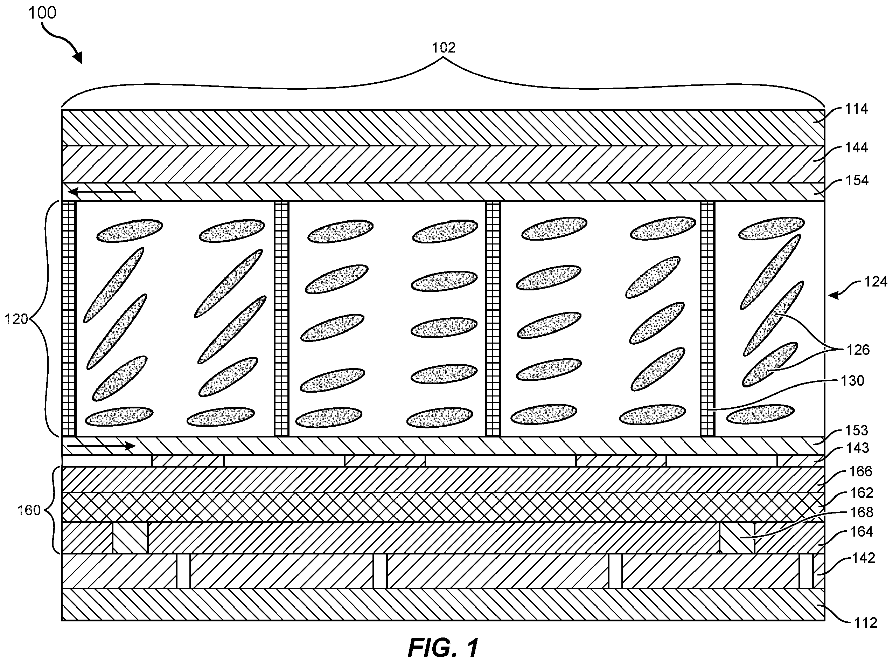

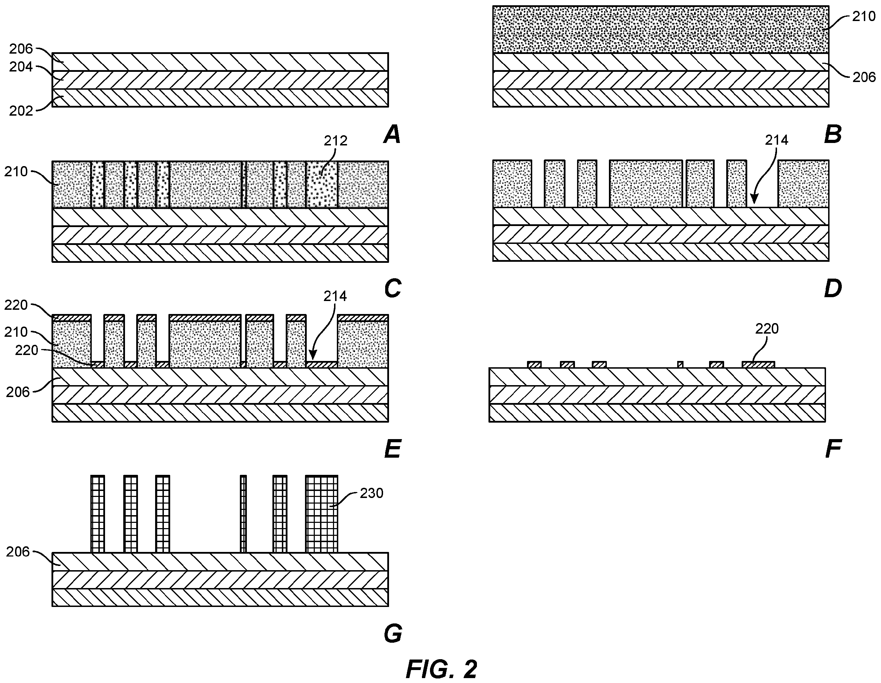

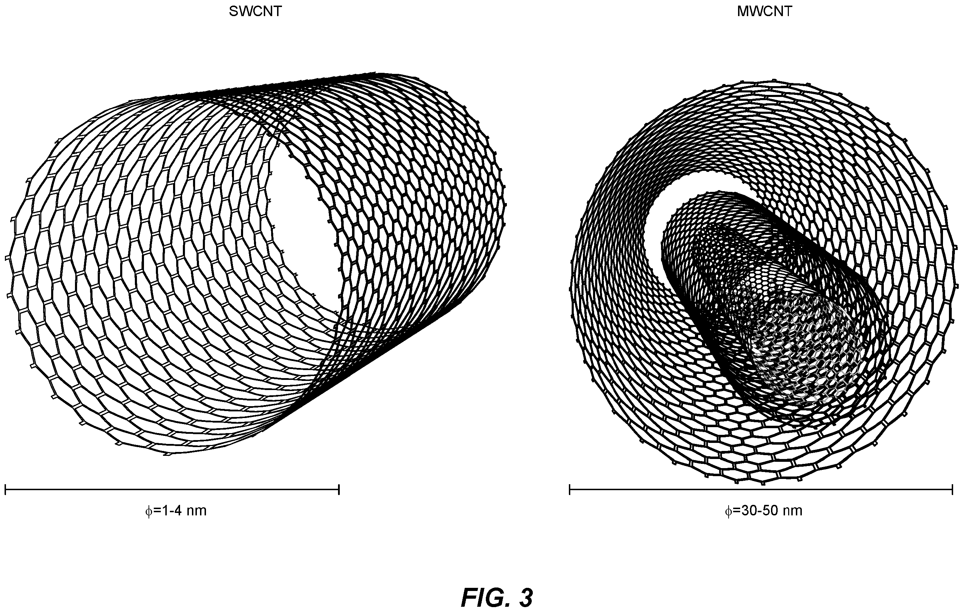

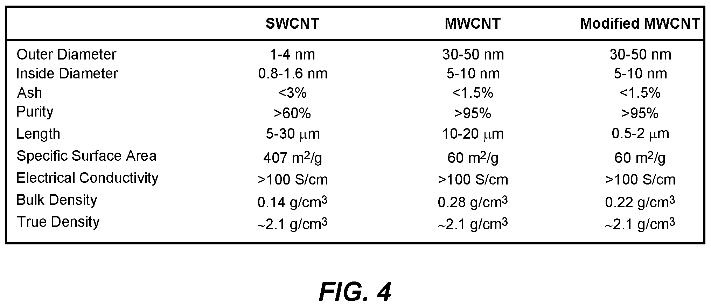

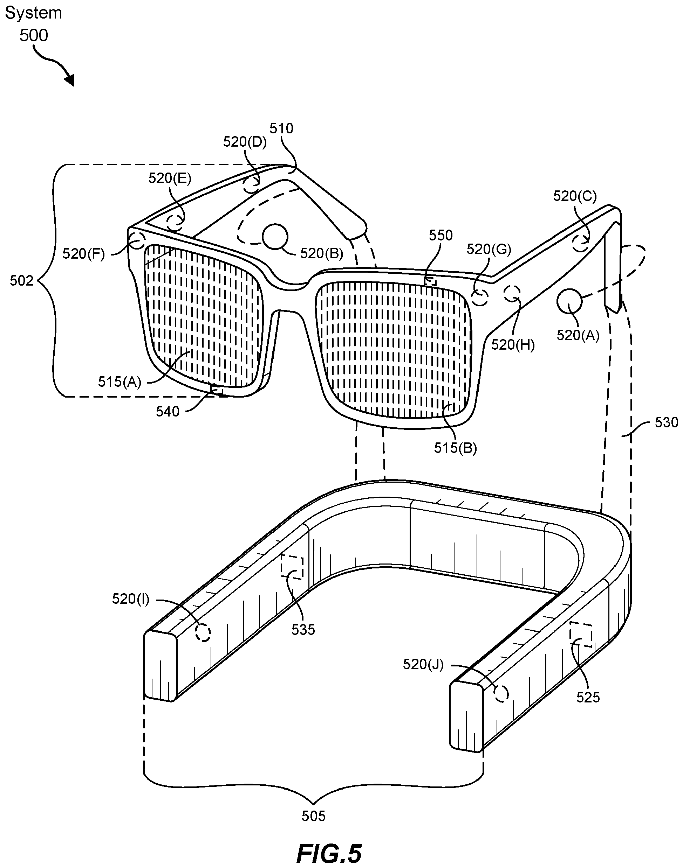

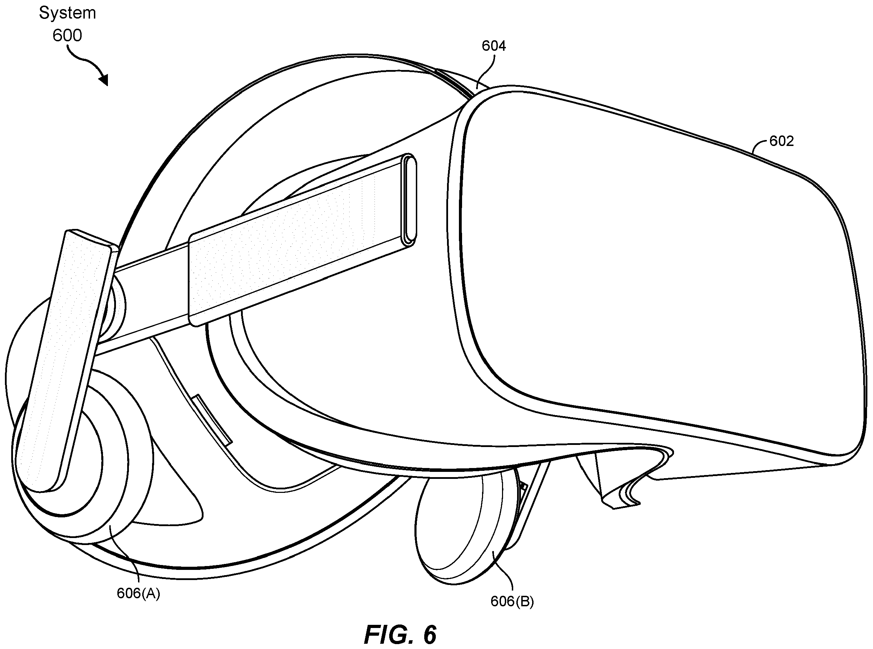

The following will provide, with reference to FIGS. 1-6, a detailed description of graded refractive index (GRIN) liquid crystal lenses having carbon nanotube spacers. The discussion associated with FIG. 1 relates to an exemplary GRIN LC lens architecture having an array of high aspect ratio carbon nanotube spacers located within and maintaining a gap between opposing optical quality substrates. The discussion associated with FIG. 2 relates to an example method of manufacturing an array of carbon nanotube spacers. The discussion associated with FIGS. 3 and 4 relates to illustrative carbon nanotube structures and properties. The discussion associated with FIGS. 5 and 6 relates to exemplary virtual reality and augmented reality devices that may include one or more GRIN LC lenses as disclosed herein.

Referring to FIG. 1, shown is a cross-sectional view of a segment of an example GRIN LC lens 100 having an optical aperture 102. The GRIN LC lens includes a pair of optical substrates 112, 114 defining a liquid crystal-filled cell gap 120 located between the substrates. The substrates 112, 114 may be formed from glass or another optically transparent and insulating material and may each have a thickness ranging from approximately 100 to 300 micrometers, e.g., 100, 150, 200, 250, or 300 micrometers, including ranges between any of the foregoing values.

In the illustrated embodiment, a liquid crystal layer 124 is disposed within the cell gap 120, and an array of carbon nanotube spacers 130 extends across the cell gap 120 and is configured to maintain a uniform spacing between the substrates 112, 114. Further, an electrode architecture may be configured to apply an electrical bias across the cell gap 120 to tune the orientation of liquid crystal molecules 126 within the liquid crystal layer 124.

Each substrate 112, 114 may be metallized with a respective electrode 142, 144, and a further electrode layer 143 may be disposed adjacent to the liquid crystal layer 124. Electrode layers 142, 143 may be patterned, e.g., to overlie discrete portions of the liquid crystal layer 124 between the carbon nanotube spacers 130. Example electrode materials include transparent conductive oxides, such as indium tin oxide (ITO).

The electrode layers 143, 144 are each insulated from the liquid crystal layer 124 by a respective cell gap-facing dielectric layer 153, 154, such as a polyimide layer. Opposing ends of the carbon nanotube spacers 130 may directly contact each of the dielectric layers. The GRIN LC lens 100 may additionally include a metallization architecture 160 including a bus line 162 disposed between insulating layers 164, 166 that is electrically connected to selected regions of the electrodes 142, 143, e.g., through conductive vias 168 for providing an electrical voltage to selected regions of the liquid crystal layer 124. Relative to comparative GRIN LC lenses, the presently-disclosed lens architectures may exhibit improved optical performance, including decreased bulk haze and parallax, as well as improved manufacturability and cost.

Referring to FIG. 2, depicted is an example method of manufacturing an array of carbon nanotube spacers. As shown in FIG. 2A, a portion of a GRIN LC lens architecture may include, from bottom to top, a glass substrate 202, an electrode layer 204, and a dielectric layer 206. Referring to FIG. 2B, a photoresist layer 210, such as a layer of positive photoresist, may be formed over dielectric layer 206. The photoresist layer 210 may be formed by spin coating, for example, and then cured by one or both of heating and exposure to radiation (e.g., UV radiation).

Referring to FIG. 2C, a masking layer (not shown) may be formed over the layer of photoresist 210 and patterned, and unmasked portions 212 of the photoresist layer 210 may be exposed to light. Referring to FIG. 2D, exposed portions 212 of the photoresist layer may be removed by exposing the photoresist layer 210 to a photoresist developer to form a pattern of vias 214 extending through the photoresist layer and exposing portions of dielectric layer 206. Subsequently, referring to FIG. 2E, a seed layer 220 may be deposited over the patterned structure of FIG. 2D, including directly over the dielectric layer 206 within vias 214. The seed layer 220 may include iron nanoparticles, for example. As shown in FIG. 2F, a lift-off process may be used to remove un-developed portions of photoresist layer 210 and overlying portions of seed layer 220, leaving a patterned seed layer 220 defining regions for carbon nanotube (CNT) growth. Vertically-aligned single wall or multi-walled CNT pillars 230 may be formed by anisotropic growth from the patterned seed layer 220.

Schematic illustrations depicting the architectures of a multi-walled carbon nanotube and a single wall carbon nanotube are shown in FIG. 3. Selected properties of multi-walled carbon nanotubes, including length-modified multi-walled carbon nanotubes, and single wall carbon nanotubes are tabulated in FIG. 4.

According to some embodiments, an electrically tunable GRIN LC lens includes a liquid crystal (LC) layer disposed within a cell gap between an opposing pair of optical quality substrates, where the gap width and hence the spacing between the substrates are uniform at least within a viewing aperture of the lens. The optical quality substrates may include glass or polymer compositions, for example. According to particular embodiments, high aspect ratio carbon nanotube (CNT) pillars are located within the cell gap between the substrates. The CNT pillars are configured to maintain a large cell gap and uniform gap dimensions, while minimally contributing to light scattering during operation of the lens. A large and uniform cell gap may advantageously impact performance attributes of AR/VR headsets that include the disclosed lenses, such as low haze and good off-axis performance.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 500 in FIG. 5) or that visually immerses a user in an artificial reality (such as, e.g., virtual-reality system 600 in FIG. 6). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 5, augmented-reality system 500 may include an eyewear device 502 with a frame 510 configured to hold a left display device 515(A) and a right display device 515(B) in front of a user's eyes. Display devices 515(A) and 515(B) may act together or independently to present an image or series of images to a user. While augmented-reality system 500 includes two displays, embodiments of this disclosure may be implemented in augmented-reality systems with a single NED or more than two NEDs.

In some embodiments, augmented-reality system 500 may include one or more sensors, such as sensor 540. Sensor 540 may generate measurement signals in response to motion of augmented-reality system 500 and may be located on substantially any portion of frame 510. Sensor 540 may represent one or more of a variety of different sensing mechanisms, such as a position sensor, an inertial measurement unit (IMU), a depth camera assembly, a structured light emitter and/or detector, or any combination thereof. In some embodiments, augmented-reality system 500 may or may not include sensor 540 or may include more than one sensor. In embodiments in which sensor 540 includes an IMU, the IMU may generate calibration data based on measurement signals from sensor 540. Examples of sensor 540 may include, without limitation, accelerometers, gyroscopes, magnetometers, other suitable types of sensors that detect motion, sensors used for error correction of the IMU, or some combination thereof.

In some examples, augmented-reality system 500 may also include a microphone array with a plurality of acoustic transducers 520(A)-520(J), referred to collectively as acoustic transducers 520. Acoustic transducers 520 may represent transducers that detect air pressure variations induced by sound waves. Each acoustic transducer 520 may be configured to detect sound and convert the detected sound into an electronic format (e.g., an analog or digital format). The microphone array in FIG. 5 may include, for example, ten acoustic transducers: 520(A) and 520(B), which may be designed to be placed inside a corresponding ear of the user, acoustic transducers 520(C), 520(D), 520(E), 520(F), 520(G), and 520(H), which may be positioned at various locations on frame 510, and/or acoustic transducers 520(I) and 520(J), which may be positioned on a corresponding neckband 505.

In some embodiments, one or more of acoustic transducers 520(A)-(J) may be used as output transducers (e.g., speakers). For example, acoustic transducers 520(A) and/or 520(B) may be earbuds or any other suitable type of headphone or speaker.

The configuration of acoustic transducers 520 of the microphone array may vary. While augmented-reality system 500 is shown in FIG. 5 as having ten acoustic transducers 520, the number of acoustic transducers 520 may be greater or less than ten. In some embodiments, using higher numbers of acoustic transducers 520 may increase the amount of audio information collected and/or the sensitivity and accuracy of the audio information. In contrast, using a lower number of acoustic transducers 520 may decrease the computing power required by an associated controller 550 to process the collected audio information. In addition, the position of each acoustic transducer 520 of the microphone array may vary. For example, the position of an acoustic transducer 520 may include a defined position on the user, a defined coordinate on frame 510, an orientation associated with each acoustic transducer 520, or some combination thereof.

Acoustic transducers 520(A) and 520(B) may be positioned on different parts of the user's ear, such as behind the pinna, behind the tragus, and/or within the auricle or fossa. Or, there may be additional acoustic transducers 520 on or surrounding the ear in addition to acoustic transducers 520 inside the ear canal. Having an acoustic transducer 520 positioned next to an ear canal of a user may enable the microphone array to collect information on how sounds arrive at the ear canal. By positioning at least two of acoustic transducers 520 on either side of a user's head (e.g., as binaural microphones), augmented-reality device 500 may simulate binaural hearing and capture a 3D stereo sound field around about a user's head. In some embodiments, acoustic transducers 520(A) and 520(B) may be connected to augmented-reality system 500 via a wired connection 530, and in other embodiments acoustic transducers 520(A) and 520(B) may be connected to augmented-reality system 500 via a wireless connection (e.g., a BLUETOOTH connection). In still other embodiments, acoustic transducers 520(A) and 520(B) may not be used at all in conjunction with augmented-reality system 500.

Acoustic transducers 520 on frame 510 may be positioned in a variety of different ways, including along the length of the temples, across the bridge, above or below display devices 515(A) and 515(B), or some combination thereof. Acoustic transducers 520 may also be oriented such that the microphone array is able to detect sounds in a wide range of directions surrounding the user wearing the augmented-reality system 500. In some embodiments, an optimization process may be performed during manufacturing of augmented-reality system 500 to determine relative positioning of each acoustic transducer 520 in the microphone array.

In some examples, augmented-reality system 500 may include or be connected to an external device (e.g., a paired device), such as neckband 505. Neckband 505 generally represents any type or form of paired device. Thus, the following discussion of neckband 505 may also apply to various other paired devices, such as charging cases, smart watches, smart phones, wrist bands, other wearable devices, hand-held controllers, tablet computers, laptop computers, other external compute devices, etc.

As shown, neckband 505 may be coupled to eyewear device 502 via one or more connectors. The connectors may be wired or wireless and may include electrical and/or non-electrical (e.g., structural) components. In some cases, eyewear device 502 and neckband 505 may operate independently without any wired or wireless connection between them. While FIG. 5 illustrates the components of eyewear device 502 and neckband 505 in example locations on eyewear device 502 and neckband 505, the components may be located elsewhere and/or distributed differently on eyewear device 502 and/or neckband 505. In some embodiments, the components of eyewear device 502 and neckband 505 may be located on one or more additional peripheral devices paired with eyewear device 502, neckband 505, or some combination thereof.

Pairing external devices, such as neckband 505, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 500 may be provided by a paired device or shared between a paired device and an eyewear device, thus reducing the weight, heat profile, and form factor of the eyewear device overall while still retaining desired functionality. For example, neckband 505 may allow components that would otherwise be included on an eyewear device to be included in neckband 505 since users may tolerate a heavier weight load on their shoulders than they would tolerate on their heads. Neckband 505 may also have a larger surface area over which to diffuse and disperse heat to the ambient environment. Thus, neckband 505 may allow for greater battery and computation capacity than might otherwise have been possible on a stand-alone eyewear device. Since weight carried in neckband 505 may be less invasive to a user than weight carried in eyewear device 502, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 505 may be communicatively coupled with eyewear device 502 and/or to other devices. These other devices may provide certain functions (e.g., tracking, localizing, depth mapping, processing, storage, etc.) to augmented-reality system 500. In the embodiment of FIG. 5, neckband 505 may include two acoustic transducers (e.g., 520(I) and 520(J)) that are part of the microphone array (or potentially form their own microphone subarray). Neckband 505 may also include a controller 525 and a power source 535.

Acoustic transducers 520(I) and 520(J) of neckband 505 may be configured to detect sound and convert the detected sound into an electronic format (analog or digital). In the embodiment of FIG. 5, acoustic transducers 520(I) and 520(J) may be positioned on neckband 505, thereby increasing the distance between the neckband acoustic transducers 520(I) and 520(J) and other acoustic transducers 520 positioned on eyewear device 502. In some cases, increasing the distance between acoustic transducers 520 of the microphone array may improve the accuracy of beamforming performed via the microphone array. For example, if a sound is detected by acoustic transducers 520(C) and 520(D) and the distance between acoustic transducers 520(C) and 520(D) is greater than, e.g., the distance between acoustic transducers 520(D) and 520(E), the determined source location of the detected sound may be more accurate than if the sound had been detected by acoustic transducers 520(D) and 520(E).

Controller 525 of neckband 505 may process information generated by the sensors on neckband 505 and/or augmented-reality system 500. For example, controller 525 may process information from the microphone array that describes sounds detected by the microphone array. For each detected sound, controller 525 may perform a direction-of-arrival (DOA) estimation to estimate a direction from which the detected sound arrived at the microphone array. As the microphone array detects sounds, controller 525 may populate an audio data set with the information. In embodiments in which augmented-reality system 500 includes an inertial measurement unit, controller 525 may compute all inertial and spatial calculations from the IMU located on eyewear device 502. A connector may convey information between augmented-reality system 500 and neckband 505 and between augmented-reality system 500 and controller 525. The information may be in the form of optical data, electrical data, wireless data, or any other transmittable data form. Moving the processing of information generated by augmented-reality system 500 to neckband 505 may reduce weight and heat in eyewear device 502, making it more comfortable to the user.

Power source 535 in neckband 505 may provide power to eyewear device 502 and/or to neckband 505. Power source 535 may include, without limitation, lithium ion batteries, lithium-polymer batteries, primary lithium batteries, alkaline batteries, or any other form of power storage. In some cases, power source 535 may be a wired power source. Including power source 535 on neckband 505 instead of on eyewear device 502 may help better distribute the weight and heat generated by power source 535.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 600 in FIG. 6, that mostly or completely covers a user's field of view. Virtual-reality system 600 may include a front rigid body 602 and a band 604 shaped to fit around a user's head. Virtual-reality system 600 may also include output audio transducers 606(A) and 606(B). Furthermore, while not shown in FIG. 6, front rigid body 602 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 500 and/or virtual-reality system 600 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 500 and/or virtual-reality system 600 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 500 and/or virtual-reality system 600 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50t5, i.e., values within the range 45 to 55.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a liquid crystal material that comprises a cyanobiphenyl compound include embodiments where a liquid crystal material consists essentially of a cyanobiphenyl compound and embodiments where a liquid crystal material consists of a cyanobiphenyl compound.

## Claims

1. An optical element comprising:
a first optical substrate;
a second optical substrate overlying at least a portion of the first optical substrate;
a liquid crystal layer disposed within a cell gap between the first optical substrate and the second optical substrate; and
a plurality of carbon nanotube pillars extending between the first optical substrate and the second optical substrate across the cell gap.

2. The optical element of claim 1, wherein the first and second optical substrates comprise glass.

3. The optical element of claim 1 or 2, wherein a thickness of the first and second optical substrates independently ranges from approximately 100 micrometers to approximately 300 micrometers.

4. The optical element of any preceding claim, wherein an inter-substrate dimension of the cell gap is spatially invariant across a viewing aperture of the optical element.

5. The optical element of any preceding claim, wherein an inter-substrate dimension of the cell gap ranges from approximately 5 micrometers to approximately 50 micrometers.

6. The optical element of any preceding claim, wherein the carbon nanotube pillars have a length of from approximately 5 micrometers to approximately 50 micrometers.

7. The optical element of any preceding claim, wherein the carbon nanotube pillars have a diameter of from approximately 2 nm to approximately 50 nm.

8. The optical element of any preceding claim, wherein the carbon nanotube pillars have an aspect ratio of at least approximately 2:1.

9. The optical element of any preceding claim, wherein the carbon nanotube pillars are arranged as a regular array between the first and second optical substrates.

10. The optical element of any preceding claim, wherein the carbon nanotube pillars are configured to maintain a uniform cell gap between the first and second optical substrates.

11. The optical element of any preceding claim, wherein:
the optical element comprises a viewing aperture that extends through the first and second optical substrates and the liquid crystal layer and includes at least one of the plurality of carbon nanotube pillars; and
the viewing aperture comprises a transmissivity across the visible spectrum of at least approximately 80% and less than approximately 10% bulk haze.

12. The optical element of any preceding claim, further comprising:
a first electrode layer disposed between the liquid crystal layer and the first optical substrate; and
a second electrode layer disposed between the liquid crystal layer and the second optical substrate.

13. An augmented reality (AR) or virtual reality (VR) system comprising:
an AR or VR headset; and
a variable power lens comprising the optical element of any preceding claim.

14. A method comprising:
forming a plurality of carbon nanotube pillars over and extending away from a first optical substrate;
forming a second optical substrate over the first optical substrate, wherein the plurality of carbon nanotube pillars define a cell gap between the first optical substrate and the second optical substrate; and
forming a liquid crystal layer within the cell gap.

15. The method of claim 14, wherein forming the plurality of carbon nanotube pillars comprises:
forming a dielectric layer over the first optical substrate;
forming a templating layer over the dielectric layer;
etching the templating layer to form a plurality of vias extending entirely through the templating layer;
depositing a seed layer over exposed portions of the dielectric layer within the plurality of vias; and
exposing the seed layer to a carbon nanotube precursor to form the carbon nanotube pillars.
